# EUROPEAN PATENT APPLICATION

(11) **EP 4 425 869 A1**
(43) Date of publication of application: **04.09.2024**
(21) Application number: 23159931.7
(22) Date of filing: 03.03.2023
(51) Int. Cl.: H04L 41/5019, H04W 24/02, H04L 41/14

(54) **FULFILLMENT CONTROL IN INTENT-BASED NETWORKING**

(71) Applicant: Nokia Technologies Oy, 02610 Espoo (FI)
(72) Inventor: BRAHAM, Hajer, 94800 Villejuif (FR); MWANJE, Stephen, 84405 Dorfen (DE); BANERJEE, Anubhab, 80992 Munich (DE)
(74) Representative: TBK

(57) **Abstract**

There are provided measures for fulfillment control in intent-based networking. Such measures exemplarily comprise determining timing information indicative of when accomplishing a specific sub-target of a requested network management outcome is required, said requested network management outcome including at least one sub-target including said specific sub-target.

## Description

### Field

Various example embodiments relate to fulfillment control in intent-based networking. More specifically, various example embodiments exemplarily relate to measures (including methods, apparatuses and computer program products) for realizing fulfillment control in intent-based networking.

### Background

The present specification generally relates to cognitive autonomous networks (CAN) in 3^{rd} Generation Partnership Project (3GPP) 5GS networks and other (future) generations of wireless/mobile networks, and specifically to use of intents in managing networks.

Owing to the complexity of networks, there is always a push for more automation and abstraction. One recent approach for the abstraction is through the use of intents in what may be termed intent-based networking (IBN).

In this context, the intent is a flexible abstract way of specifying a required outcome/goal by a consumer without specifying exactly how this should be achieved. The exact method of achieving a specified intent is left to an intent fulfilment system (IFS) offering the intent service.

Specified intents can vary from simple intents, that can be fulfilled with a single command to a specific network object, to very complex intents, that include multiple network nodes and several commands on several network objects.

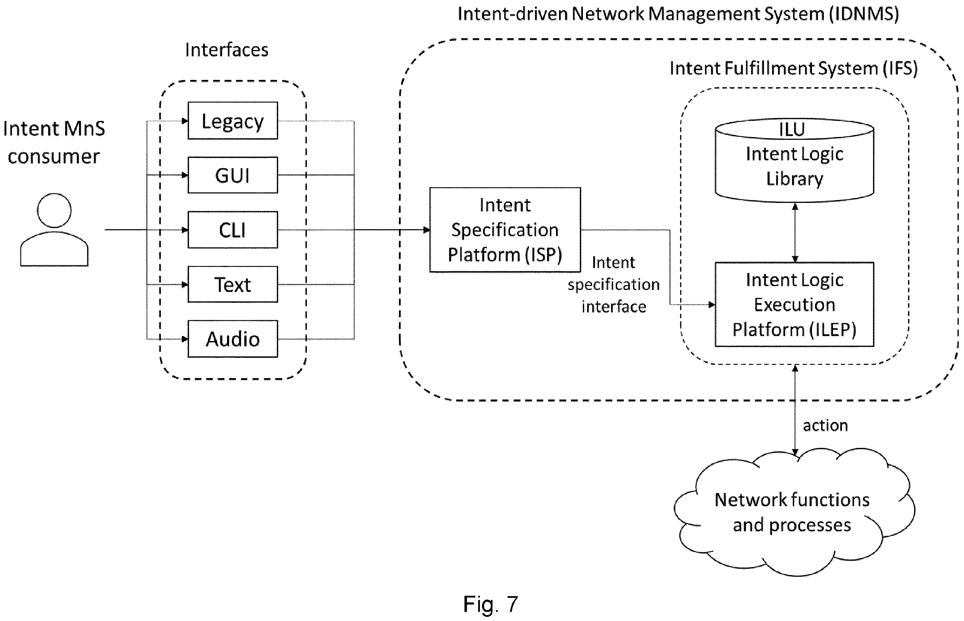

Figure 7 shows a schematic diagram of an example of a system environment with signaling variants, and in particular illustrates an example of an intent-driven network management system (IDNMS).

As shown in Figure 7, the IDNMS may include an intent specification platform (ISP) responsible for capturing and formatting the intent into a formal intent fitting a specified information model, as well as an IFS which receives and then fulfils the formal intent.

As a whole, the IDNMS is seen as a Blackbox by the consumer and network resources/entities.

The consumer may interact with the IDNMS through interfaces defined by Standards Development Organizations (SDO) (e.g. legacy control operations for backwards compatibility, graphical user interface (GUI), command line interface, etc.).

However, situations in which a consumer needs a specific intent achieved by a specific time (at the latest) is not considered by the above-illustrated IDNMS generally allowing for IBN.

Hence, the problem arises that while control may be performed towards achievement of specific intents, such achievement may be reached too late for the consumer.

Hence, there is a need to provide for fulfillment control in intent-based networking.

### Summary

Various example embodiments aim at addressing at least part of the above issues and/or problems and drawbacks.

Various aspects of example embodiments are set out in the appended claims.

According to an exemplary aspect, there is provided a method comprising determining timing information indicative of when accomplishing a specific sub-target of a requested network management outcome is required, said requested network management outcome including at least one sub-target including said specific sub-target, and transmitting said timing information.

According to an exemplary aspect, there is provided a method comprising deriving timing information indicative of when accomplishing a specific sub-target of a requested network management outcome is required, said requested network management outcome including at least one sub-target including said specific sub-target, and controlling network management actions for satisfying said specific sub-target based on said timing information.

According to an exemplary aspect, there is provided an apparatus comprising determining circuitry configured to determine timing information indicative of when accomplishing a specific sub-target of a requested network management outcome is required, said requested network management outcome including at least one sub-target including said specific sub-target, and transmitting circuitry configured to transmit said timing information.

According to an exemplary aspect, there is provided an apparatus comprising deriving circuitry configured to derive timing information indicative of when accomplishing a specific sub-target of a requested network management outcome is required, said requested network management outcome including at least one sub-target including said specific sub-target, and controlling circuitry configured to control network management actions for satisfying said specific sub-target based on said timing information.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform determining timing information indicative of when accomplishing a specific sub-target of a requested network management outcome is required, said requested network management outcome including at least one sub-target including said specific sub-target, and transmitting said timing information.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform deriving timing information indicative of when accomplishing a specific sub-target of a requested network management outcome is required, said requested network management outcome including at least one sub-target including said specific sub-target, and controlling network management actions for satisfying said specific sub-target based on said timing information.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables efficient consideration of consumer's needs in relation to timings of achieving required intents and related communication to thereby solve at least part of the problems and drawbacks identified in relation to the prior art.

By way of example embodiments, there is provided fulfillment control in intent-based networking. More specifically, by way of example embodiments, there are provided measures and mechanisms for realizing fulfillment control in intent-based networking.

Thus, improvement is achieved by methods, apparatuses and computer program products enabling/realizing fulfillment control in intent-based networking.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a schematic diagram of a procedure according to example embodiments,
Figure 6 is a schematic diagram of a procedure according to example embodiments,
Figure 7 shows a schematic diagram of an example of a system environment with signaling variants,
Figure 8 shows a schematic diagram of an example of a system environment with signaling variants according to example embodiments,
Figure 9 shows a schematic diagram of signaling sequences according to example embodiments, and
Figure 10 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following:" and "at least one of" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) fulfillment control in intent-based networking.

As mentioned above, situations in which a consumer needs a specific intent achieved by a specific time (at the latest) is not considered by the above-illustrated IDNMS generally allowing for IBN.

Namely, there has been no clear description on how long an IDNMS should try to fulfil a specific intent and how long an intent owner should wait for the intent outcome (in case of fulfilment or non-fulfilment).

In detail, an intent specifies one or multiple target(s) with or without extra constraint(s). To achieve the target specified in the intent, the intent management services (MnS) producer may collect and analyze the related data before making a decision.

For example, an intent is considered, which specifies some targets and constraints related to radio condition (e.g., downlink (DL) average user equipment (UE) throughput, radio link failures (RLF), interference). To realize this intent, the intent MnS producer may need to collect and analyze the radio environment data (e.g., transmitted power (TXP), remote electrical tilting (RET), reference signal received power (RSRP)) of radio access network (RAN) network elements (NE) in the specific cells. The action, based on the decision of the intent MnS producer, may not always be enough to achieve the specified target(s). For this reason, the intent MnS producer may need to iteratively collect and analyze data, and make decision(s) and take action(s) based on the analysis to fulfil the specified target(s).

Current specification enables the intent MnS producer to provide fulfilment information to any MnS consumer that might be interested in the fulfilment status of the intent (including the intent owner). These assume that the intent MnS consumer shall wait for the producer to provide the fulfilment information at whatever time the producer has such fulfilment information. However, this raises at least two challenges as illustrated by the example below:
For this example, it is considered that at a time t1, an intent MnS producer receives Intent1 with an expectation on coverage performance containing some target on RLFs and constraint on interference. To fulfil Intent1, in the serving cell, the intent MnS producer learns from analyzing the collected data that time-to-trigger (TTT) and cell individual offset (CIO) values need to be set to T1 and C1 respectively. However, the intent MnS producer finds that (T1, C1) are not the correct values to achieve the target. Meanwhile, in the example, at time t2 (t2 = t1 + Δt, Δt > 0), the intent MnS producer receives Intent2 with some target on ping-pong handover (PPHO). To fulfil Intent2, the intent MnS producer needs to analyze and determine the values of TTT and CIO again.

In such a case of overlapping interests,
1. there may be cases where the intent MnS consumers are not able to wait for the undisclosed time by which fulfilment information shall be sent; For example, if an intent MnS consumer has a subsequent intent that needs to be fulfilled, that intent MnS consumer would want to know the time by when Intent1 is expected to be fulfilled so as to plan its delivery of the subsequent Intent2, and
2. intent fulfilment information may unnecessarily overload the intent interface with non-useful information; For example, after Intent1, the intent MnS producer may notify the intent MnS consumer with intent fulfilment information that includes coverage performance for the specified area with the expectation that the intent MnS consumer can use that to monitor the intent and decide whether to terminate the intent or not; Such information is useless if the planned actions shall not achieve the desired outcomes; Moreover, in a system where there are many prior intents, the fulfilment information from the many intents may not be useful for managing the intents; Even then the intent MnS producer should have the information indicating when to give up fulfilment of the intent or at least when the intent owner expects the intent to be fulfilled.

For these cases, it may be advantageous to provide information indicating the time within which the service becomes unusable in case the key performance indicator (KPI) target(s) is/are not achieved. Such information enables the intent MnS producer to decide when to consider that the intent cannot be fulfilled.

Hence, in brief, according to example embodiments, approaches are provided enabling the intent owner to provide information on the deadline within which it is expecting the intent to be fulfilled.

In particular, according to example embodiments, approaches (e.g. means, methods, related apparatuses) to manage the time needed or the time taken to fulfil intents at the intent MnS producer are provided.

Specifically, according to example embodiments, approaches (e.g. means, methods, related apparatuses) for the intent owner (e.g. through the intent MnS consumer) to provide information on the deadline within which the intent owner expects the intent to be fulfilled and approaches (e.g. means, methods, related apparatuses) for the intent MnS producer to continuously track the fulfilment but only notifying the consumer either when the intent is fulfilled or when the deadline is reached before the intent is fulfilled are provided.

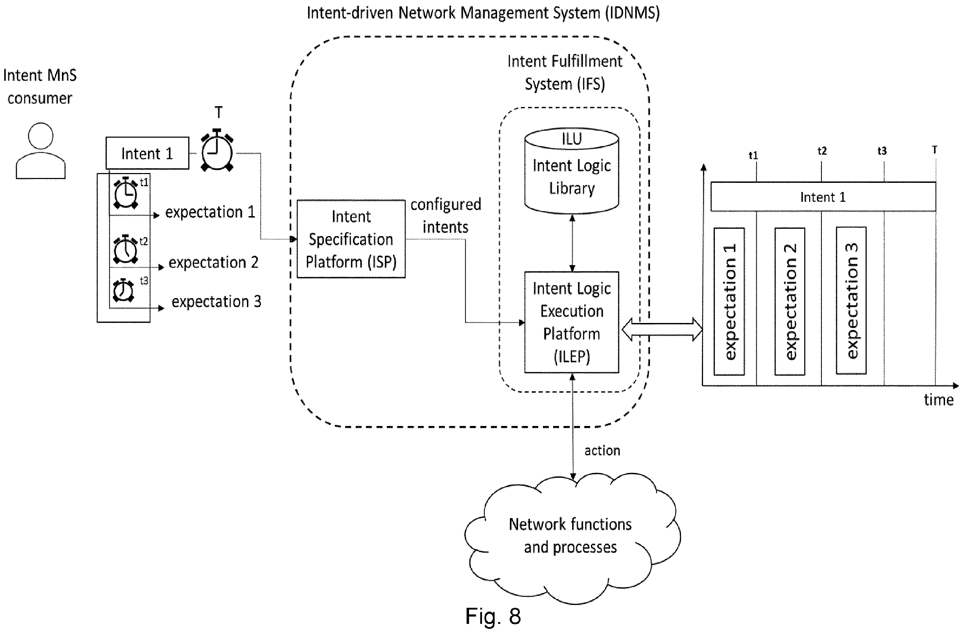

Namely, according to example embodiments, an intent MnS consumer indicates a fulfilment deadline for an intent or a fulfilment deadline for each expectation of the same intent, which is indicated by Figure 8 showing a schematic diagram of an example of a system environment with signaling variants according to example embodiments.

According to example embodiments, the intent MnS consumer may implement an attribute for an intent fulfilment deadline, e.g. called "intentFulfilmentDeadline" ("intentFulfillmentDeadline"), that indicates the time by which the intent should either be fulfilled or at which the intent MnS consumer should give up on fulfillment as the intent MnS consumer shall consider the intent to be not fulfillable.

Further, an intent may contain multiple expectations. According to example embodiments, the intent MnS consumer implements a deadline for each expectation in the intent, e.g. called "expectationFulfilmentDeadline" ("expectationFulfillmentDeadline"), denoting the time by which an expectation should either be fulfilled or be discarded by the intent MnS consumer. Beyond this deadline, the intent MnS consumer may consider an expectation to be not fulfillable.

According to example embodiments, the "intentFulfilmentDeadline" or "expectationFulfilmentDeadline" is expressed in either of the two ways, but is not limited thereto:
- As an absolute time, i.e., using a system generated timestamp.
- In a relative way, i.e., a certain amount of time after the intent is received by the MnS producer.

According to example embodiments, the intent MnS consumer sets the two types of fulfilment deadlines (or one thereof) when instantiating the intent. Alternatively (or in addition), the intent MnS consumer reconfigures the fulfilment deadline sometime after instantiating the intent.

According to example embodiments, the intent MnS producer optimizes its intent fulfilment plan using the provided fulfilment deadline. For example, the intent MnS producer may change the sequence of fulfilment of different expectations depending on their fulfilment deadlines or change the sequence of fulfilment of different intents depending on their fulfilment deadlines as indicated in Figure 8.

As an example, if the intent MnS consumer instantiates an intent with multiple intent expectations and the "intentFulfilmentDeadline", the intent MnS producer according to example embodiments may set "expectationFulfilmentDeadline" for each individual expectation to optimize the intent fulfillment, i.e., prioritizing some expectations over the others. However, in that case, the intent MnS producer according to example embodiments makes sure that all the individual "expectationFulfilmentDeadline(s)" are compliant with the "intentFulfilmentDeadline".

According to still further example embodiments, the intent MnS producer informs the intent MnS consumer when the deadline expires before achieving fulfilment of the intent or intent expectation.

Example embodiments are specified below in more detail.

Herein, an intent may be considered as comprising expectations including requirements, goals and constraints (e.g. given to a 3GPP system), without specifying how to achieve them.

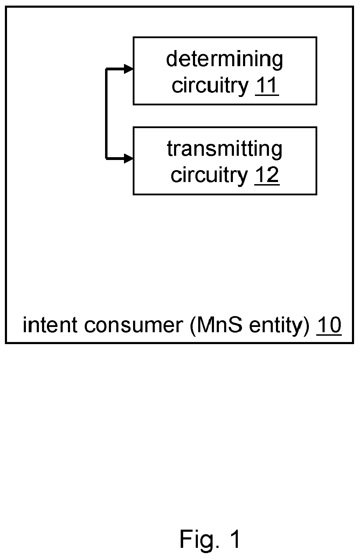

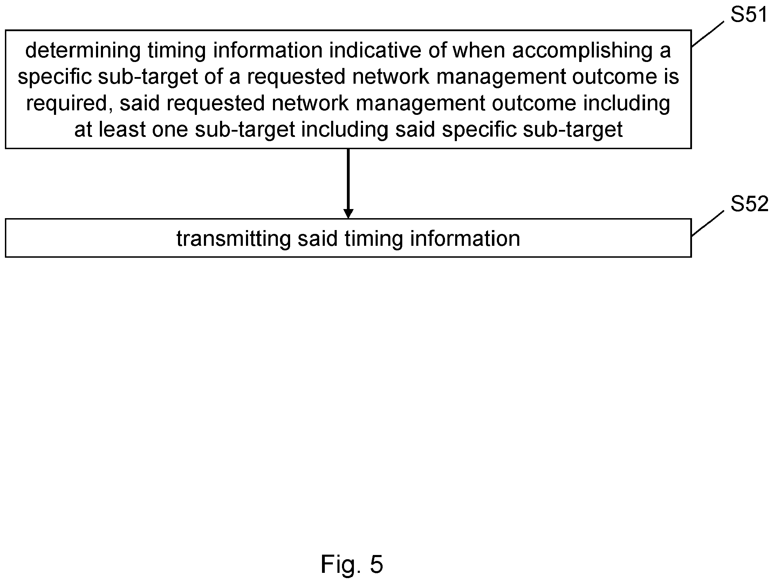

Figure 1 is a block diagram illustrating an apparatus according to example embodiments. The apparatus may be a network node or entity 10 such as an intent consumer entity or management services entity (or a node or entity embodying such functionality) comprising a determining circuitry 11 and a transmitting circuitry 12. The determining circuitry 11 determines timing information indicative of when accomplishing a specific sub-target of a requested network management outcome is required, said requested network management outcome including at least one sub-target including said specific sub-target. The transmitting circuitry 12 transmits said timing information. An example for a network management outcome is an intent in the context of intent-based networking. An example for a sub-target of a requested network management outcome is an intent expectation in the context of intent-based networking. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of determining (S51) timing information indicative of when accomplishing a specific sub-target of a requested network management outcome is required, said requested network management outcome including at least one sub-target including said specific sub-target, and an operation of transmitting (S52) said timing information.

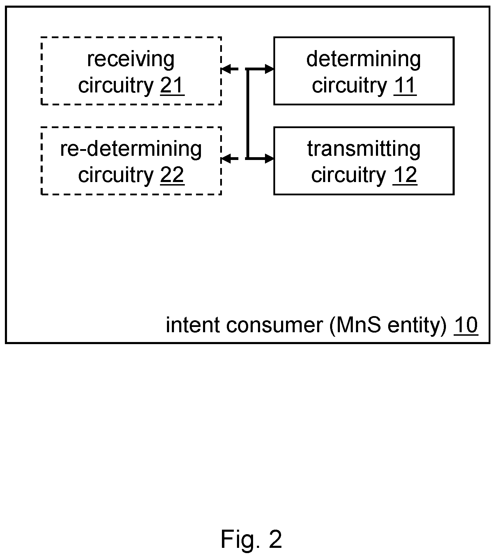

Figure 2 is a block diagram illustrating an apparatus according to example embodiments. In particular, Figure 2 illustrates a variation of the apparatus shown in Figure 1. The apparatus according to Figure 2 may thus further comprise a receiving circuitry 21 and/or a re-determining circuitry 22.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 5, exemplary additional operations are given, which are inherently independent from each other as such. According to such variation, an exemplary method according to example embodiments may comprise an operation of transmitting a request for said requested network management outcome, wherein said request for said requested network management outcome includes said timing information.

Alternatively, according to a variation of the procedure shown in Figure 5, exemplary additional operations are given, which are inherently independent from each other as such. According to such variation, an exemplary method according to example embodiments may comprise an operation of transmitting a request for an update of said requested network management outcome, wherein said request for said update of said requested network management outcome includes said timing information.

According to further example embodiments, said timing information represents an absolute time by when said accomplishing said specific sub-target is required.

Alternatively, according to further example embodiments, said timing information represents a relative time, from a specific moment in time, by when said accomplishing said specific sub-target is required. Optionally, according to further example embodiments, said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.

According to a variation of the procedure shown in Figure 5, exemplary additional operations are given, which are inherently independent from each other as such. According to such variation, an exemplary method according to example embodiments may comprise an operation of receiving a request response including information indicative of whether said accomplishing said specific sub-target by when said accomplishing said specific sub-target is required according to said timing information is feasible.

According to a variation of the procedure shown in Figure 5, exemplary additional operations are given, which are inherently independent from each other as such. According to such variation, said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and an exemplary method according to example embodiments may comprise an operation of re-determining said timing information, and an operation of transmitting said re-determined timing information.

According to a variation of the procedure shown in Figure 5, exemplary additional operations are given, which are inherently independent from each other as such. According to such variation, an exemplary method according to example embodiments may comprise an operation of receiving a notification indicative of that said specific sub-target is achieved.

Alternatively, according to a variation of the procedure shown in Figure 5, exemplary additional operations are given, which are inherently independent from each other as such. According to such variation, an exemplary method according to example embodiments may comprise an operation of receiving a notification indicative of that a period corresponding to when said accomplishing said specific sub-target is required according to said timing information is expired without said specific sub-target being achieved.

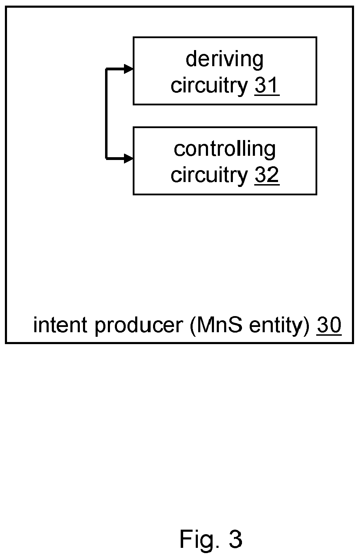

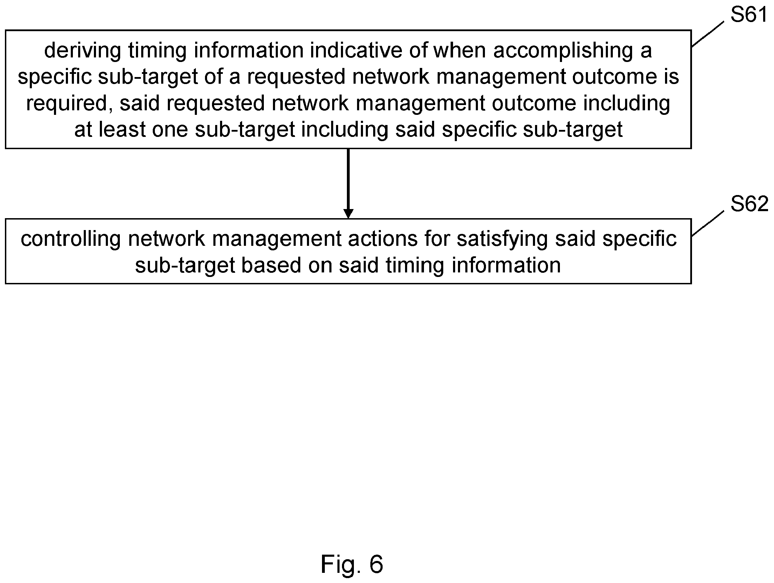

Figure 3 is a block diagram illustrating an apparatus according to example embodiments. The apparatus may be a network node or entity 30 such as an intent producer entity or management services entity (or a node or entity embodying such functionality) comprising a deriving circuitry 31 and a controlling circuitry 32. The deriving circuitry 31 derives timing information indicative of when accomplishing a specific sub-target of a requested network management outcome is required, said requested network management outcome including at least one sub-target including said specific sub-target. The controlling circuitry 32 controls network management actions for satisfying said specific sub-target based on said timing information. An example for a network management outcome is an intent in the context of intent-based networking. An example for a sub-target of a requested network management outcome is an intent expectation in the context of intent-based networking. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to example embodiments comprises an operation of deriving (S61) timing information indicative of when accomplishing a specific sub-target of a requested network management outcome is required, said requested network management outcome including at least one sub-target including said specific sub-target, and an operation of controlling (S62) network management actions for satisfying said specific sub-target based on said timing information.

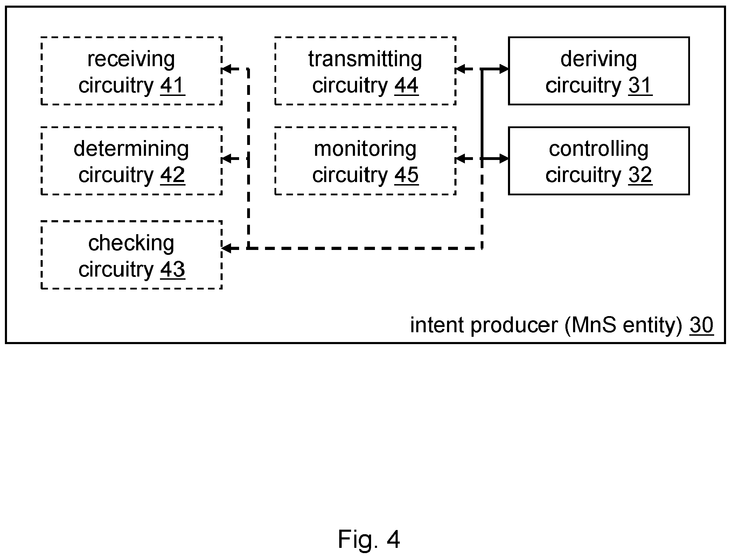

Figure 4 is a block diagram illustrating an apparatus according to example embodiments. In particular, Figure 4 illustrates a variation of the apparatus shown in Figure 3. The apparatus according to Figure 4 may thus further comprise a receiving circuitry 41, a determining circuitry 42, a checking circuitry 43, a transmitting circuitry 44, and/or a monitoring circuitry 45.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 6, exemplary details of the deriving operation (S61) are given, which are inherently independent from each other as such. Such exemplary deriving operation (S61) according to example embodiments may comprise an operation of receiving said timing information.

According to a variation of the procedure shown in Figure 6, exemplary additional operations are given, which are inherently independent from each other as such. According to such variation, an exemplary method according to example embodiments may comprise an operation of receiving a request for said requested network management outcome, wherein said request for said requested network management outcome includes said timing information.

Alternatively, according to a variation of the procedure shown in Figure 6, exemplary additional operations are given, which are inherently independent from each other as such. According to such variation, an exemplary method according to example embodiments may comprise an operation of receiving a request for an update of said requested network management outcome, wherein said request for said update of said requested network management outcome includes said timing information.

According to a variation of the procedure shown in Figure 6, exemplary details of the deriving operation (S61) are given, which are inherently independent from each other as such. According to a variation, according to example embodiments, said timing information is first timing information. Further, such exemplary deriving operation (S61) according to example embodiments may comprise an operation of receiving second timing information indicative of when accomplishing said requested network management outcome is required, and an operation of determining said first timing information based on said second timing information such that each of said at least one sub-target including said specific sub-target is accomplished by when said accomplishing said requested network management outcome is required.

According to a variation of the procedure shown in Figure 6, exemplary additional operations are given, which are inherently independent from each other as such. According to such variation, an exemplary method according to example embodiments may comprise an operation of receiving a request for said requested network management outcome, wherein said request for said requested network management outcome includes said second timing information.

Alternatively, according to a variation of the procedure shown in Figure 6, exemplary additional operations are given, which are inherently independent from each other as such. According to such variation, an exemplary method according to example embodiments may comprise an operation of receiving a request for an update of said requested network management outcome, wherein said request for said update of said requested network management outcome includes said second timing information.

According to further example embodiments, said timing information represents an absolute time by when said accomplishing said specific sub-target is required.

Alternatively, according to further example embodiments, said timing information represents a relative time, from a specific moment in time, by when said accomplishing said specific sub-target is required. Optionally, according to further example embodiments, said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.

According to a variation of the procedure shown in Figure 6, exemplary additional operations are given, which are inherently independent from each other as such. According to such variation, an exemplary method according to example embodiments may comprise an operation of checking whether said accomplishing said specific sub-target by when said accomplishing said specific sub-target is required according to said timing information is feasible, and an operation of transmitting a request response including information indicative of whether said accomplishing said specific sub-target by when said accomplishing said specific sub-target is required according to said timing information is feasible based on a result of said checking.

According to a variation of the procedure shown in Figure 6, exemplary additional operations are given, which are inherently independent from each other as such. According to such variation, an exemplary method according to example embodiments may comprise an operation of checking whether said accomplishing said specific sub-target after when said accomplishing said specific sub-target is required according to said timing information is feasible, wherein said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the method further comprises an operation of receiving re-determined timing information.

According to a variation of the procedure shown in Figure 6, exemplary additional operations are given, which are inherently independent from each other as such. According to such variation, an exemplary method according to example embodiments may comprise an operation of monitoring a state of accomplishing said specific sub-target during a period corresponding to when said accomplishing said specific sub-target is required according to said timing information, and an operation of transmitting a notification indicative of that said specific sub-target is achieved based on said state.

Alternatively, according to a variation of the procedure shown in Figure 6, exemplary additional operations are given, which are inherently independent from each other as such. According to such variation, an exemplary method according to example embodiments may comprise an operation of monitoring a state of accomplishing said specific sub-target during a period corresponding to when said accomplishing said specific sub-target is required according to said timing information, and an operation of transmitting a notification indicative of that a period corresponding to when said accomplishing said specific sub-target is required according to said timing information is expired without said specific sub-target being achieved based on said state.

Example embodiments outlined and specified above are explained below in more specific terms.

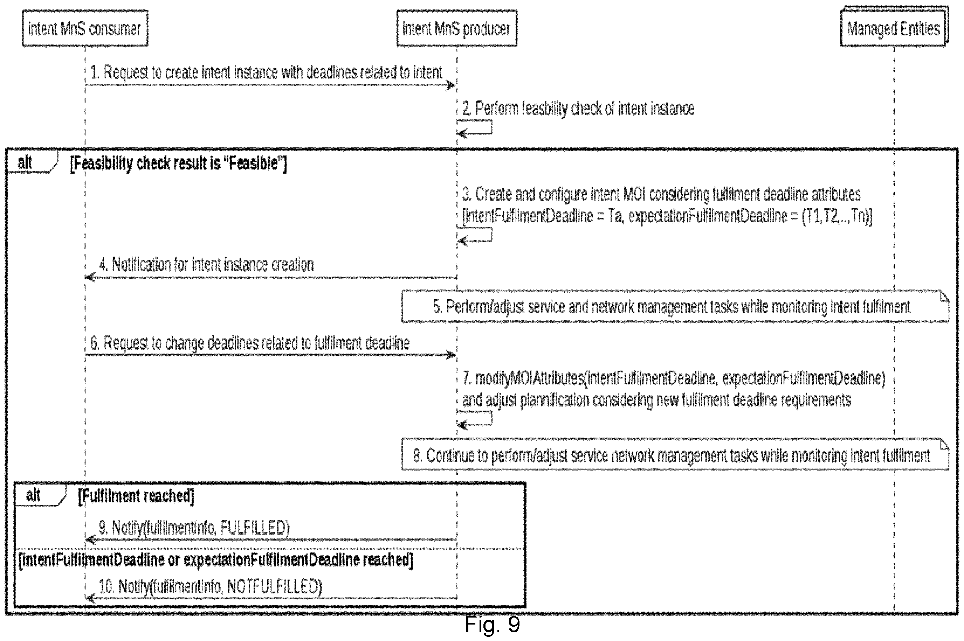

Figure 9 shows a schematic diagram of signaling sequences according to example embodiments, and in particular illustrates an example of a procedure for creating (and handling) an intent with fulfillment deadlines according to example embodiments. More specifically, Figure 9 illustrates a procedure performed to request/update an intent with a (an intent) fulfilment deadline or an expectation fulfilment deadline instantiated by an intent management services (MnS) consumer.

In a step 1 of Figure 9, according to example embodiments, an intent MnS consumer sends a request to create an intent instance to an intent MnS producer for the new intent to be created. In the request, time deadlines might be expressed by the intent MnS consumer and these might be related to the intent itself or to the intent expectations.

According to example embodiments, the request to create an intent is extended with a property indicating the desired deadline for intent expectations ("expectation Fulfi lmentDeadline" ("expectationFulfillmentDeadline")). The request to create an intent may further be extended with a property indicating the desired deadline for the intent ("intentFulfilmentDeadline" ("intentFulfillmentDeadline")). According to example embodiments, the indicative properties may be implemented e.g. in SA5 by extending the information models of the "intent" and "intentExpectations" with the new deadline properties.

In a step 2 of Figure 9, according to example embodiments, the intent MnS producer performs a feasibility check of the intent instance. According to example embodiments, the feasibility check is extended to not only check whether the intent can be fulfilled at any time but if intent expectations can be fulfilled within the specified deadline(s). According to example embodiments, the feasibility check may further be extended to check whether the intent can be fulfilled within the specified deadline.

If the feasibility check result is "NOT feasible within the deadline", according to example embodiments, the intent MnS producer sends information that it is not feasible within the deadline.

If the feasibility check result is "NOT feasible within the deadline", according to further example embodiments, the intent MnS producer may also check for feasibility outside the deadline. According to example embodiments, the intent MnS producer may then send a notification if it is feasible outside the deadline or that it also not feasible outside the deadline.

According to example embodiments, based on the provided information, the intent MnS consumer may update the deadline. Otherwise, if the deadline is not updated to a time that covers the feasible extended deadline, the intent MnS producer may decide not to attempt to fulfill the intent or its expectation.

If the feasibility check result is "feasible within the deadline", according to example embodiments, the procedure proceeds further with step 3 of Figure 9.

In a step 3 of Figure 9, according to example embodiments, based on the request, the intent MnS producer creates the concrete intent managed object instance (MOI) (i.e., instance of intent information object class (IOC)) and configures the new created intent MOI with the received requirements regarding fulfilment deadline.

In a step 4 of Figure 9, according to example embodiments, the intent MnS producer sends a notification to the intent MnS consumer about the intent instance creation.

In a step 5 of Figure 9, according to example embodiments, based on the intent, the intent MnS producer identifies the MOI for managed entities (e.g., "Managed Element", "ManagedFunction") and derives one or more executable management tasks for these managed entities. Then, the intent MnS producer deploys or configures corresponding managed entities to satisfy the intent. The intent MnS producer continuously monitors intent fulfilment status. According to example embodiments, the intent MnS producer might analyze and adjusts the managed entities to ensure that the intent is continuously satisfied.

In a step 6 of Figure 9, according to example embodiments, the intent MnS consumer changes intent attributes related to fulfilment deadlines (extend/delete fulfilment deadlines for intent or intent expectation). This is just an optional step for explaining additional features of example embodiments.

In a step 7 of Figure 9, according to example embodiments, the intent MnS producer updates the intent attributes related to "intentFulfilmentDeadline" ("intentFulfillmentDeadline") and "expectationFulfilmentDeadline" ("expectationFulfillmentDeadline") as required by the intent MnS consumer. Regarding these new requirements, the intent MnS producer might update its planification or planning for network actions defined for the intent fulfilment.

In a step 8 of Figure 9, according to example embodiments, the intent MnS producer then continues performing/adjusting service network management tasks while monitoring intent fulfilment.

In a step 9 of Figure 9, according to example embodiments, if the intent is fulfilled (before expiration of the deadline in question), then the intent MnS producer might notify the MnS consumer that the intent was "FULFILLED". In a step 10 of Figure 9, according to example embodiments, else, if both or one of the "intentFulfilmentDeadline" or the "expectationFulfilmentDeadline" is reached without the intent (or intent expectation) being fulfilled, then the intent MnS producer notifies the intent MnS consumer that the fulfilment deadline is expired, and the intent is "NOTFULFILLED".

As outlined, specified, and explained above, "intentFulfilmentDeadline" may be utilized for optimizing intent fulfillment.

In the following, more details are given on this concept according to example embodiments.

In particular, according to example embodiments, the intent MnS producer can take advantage of the "expectationFulfilmentDeadline" while fulfilling an intent with multiple expectations.

An intent MnS consumer may specify an intent with multiple expectations and the "intentFulfilmentDeadline" (but no "expectationFulfilmentDeadline").

This means that the intent MnS consumer does not have any preference over the expectations as long as all of them are fulfilled.

In such cases, according to example embodiments, the intent MnS producer may prioritize the expectations to optimize the process of the intent fulfilment. However, the intent MnS producer has to ensure that the individual "expectationFulfilmentDeadline(s)" is/are compliant with the "intentFulfilmentDeadline".

As a concrete example, it is assumed that the intent MnS producer receives an intent with multiple expectations {e1, e2, e3, e4} and an "intentFulfilmentDeadline" T (expressed in absolute timestamp).

The intent MnS producer may, in this example, set the individual "expectationFulfilmentDeadline(s)" for each intent expectation as follows:
- for e1, "expectationFulfilmentDeadline" is set to t1,
- for e2, "expectationFulfilmentDeadline" is set to t2,
- for e3, "expectationFulfilmentDeadline" is set to t3, and
- for e4, "expectationFulfilmentDeadline" is set to t4.

The intent MnS producer according to example embodiments ensures that {t1, t2, t3, t4} ≤ T.

However, the intent MnS producer has the flexibility to decide the values of t1, t2, t3, t4, and the intent MnS producer may choose the values of t1, t2, t3, t4 in a way that optimizes the combined fulfilment of all the expectations.

According to example embodiments, and in particular according to an information model ("intentInformation model") utilized for the above outlined, specified, and explained means, functions, and processes according to example embodiments, class/data type definitions (A) and attribute definitions (B) are provided as follows.

In particular, information object classes (IOC) and dataTypes needed to add the fulfilment deadline option to the intent definition may be defined as follows.

### A. Class/data type definitions

### A.1 Intent <<IOC>>

### A.1.1 Definition

This IOC represents the properties of an intent driven management information between an intent MnS consumer and an intent MnS producer.

### A.1.2 Attributes

The intent IOC includes the attribute "intentFulfilmentDeadline", indicating the time when the intent needs to be fulfilled.

Attributes included in/defined for the Intent IOC of the information model utilized for the above outlined, specified, and explained means, functions, and processes according to example embodiments are shown in the following table.

| **Attribute Name** | **Support Qualifier** | **is Readable** | **is Writable** | **is Invariant** | **is Notify-able** |
|---|---|---|---|---|---|
| intentExpectations | M | T | T | F | F |
| userLabel | M | T | T | F | F |
| intentContexts | O | T | T | F | F |
| intentFulfilmentinfo | M | T | F | F | T |
| intentFulfilmentDeadline | O | T | F | F | T |

### A.2 IntentExpectation <<dataType>>

### A.2.1 Definition

IntentExpectation < <dataType> > represents intent MnS consumer's requirements, goals and contexts given to a 3GPP system.

### A.2.2 Attributes

The IntentExpectation includes the attribute "expectationFulfilmentDeadline", indicating the time when the expectation defined needs to be fulfilled. The "expectationFulfilmentDeadline" needs to be less than or equal to the "intentFulfilmentDeadline" if specified in the Intent IOC.

Attributes included in/defined for the IntentExpectation dataType of the information model utilized for the above outlined, specified, and explained means, functions, and processes according to example embodiments are shown in the following table.

| **Attribute Name** | **Support Qualifier** | **is Readable** | **is Writable** | **is Invariant** | **is Notifyable** |
|---|---|---|---|---|---|
| expectationId | M | T | T | T | T |
| expectationVerb | O | T | T | T | F |
| expectationObject | O | T | T | F | F |
| expectationTargets | M | T | T | F | F |
| expectation Contexts | O | T | T | F | F |
| expectationfulfilmentInfo | O | T | F | F | T |
| expectationFulfilmentDeadline | O | T | F | F | T |
| NOTE: The scenario/requirements-specific IntentExpectations are defined utilizing the constructs of this generic IntentExpectation model. | | | | | |

### A.3 FulfilmentInfo < <dataType> >

### A.3.1 Definition

This dataType represents the properties of a specific fulfilment information for an aspect of the intent (i.e. either an expectation, a target or the whole intent). The fulfilment information describes the intent MnS producer's assessment of the degree to which a specific aspect of the intent has been fulfilled.

### A.3.2 Attributes

In order to consider the new requirement related to the time deadline for the intent, a new state for an attribute "notFulfilledState" as e.g. known in TS28.312 may be foreseen, which may be defined as follows:
"TIMEOUT: This state is registered if the intent is not fulfilled and one or both of the "intentFulfilmentDeadline" or the "expectationFulfilmentDeadline" is reached."

### B. Attribute definitions

Attribute definitions provided for the information model utilized for the above outlined, specified, and explained means, functions, and processes according to example embodiments are shown in the following table.

| **Attribute Names** | **Documentation and Allowed Values** | **Properties** |
|---|---|---|
| intentFulfilmentDeadline | It indicates the time when the intent needs to be fulfilled as indicated by the intent MnS consumer | type: DateTime (see TS 32.156) |
| | | multiplicity: 1 |
| | | isOrdered: N/A |
| | | isUnique: N/A |
| | | defaultValue: None |
| | | isNullable: True |
| expectationFulfilmentDeadline | It indicates the time when the intent expectation needs to be fulfilled as indicated by the intent MnS consumer | type: DateTime (see TS 32.156) |
| | | multiplicity: 1 |
| | | isOrdered: N/A |
| | | isUnique: N/A |
| | | defaultValue: None |
| | | isNullable: True |

Following the above definitions, the following may be specified for compliance with example embodiments:
- The consumer of an intent may provide to the intent MnS producer a requirement related to the fulfilment deadline. The fulfilment deadline might be related to the intent or one/many intent expectation.
- "intentFulfilmentDeadline" may be added as new attribute to the intent IOC, and "expectationFulfilmentDeadline" is added as new attribute to the IntentExpectation DataType.
- A new status is added to the attribute "notFulfilledState" part of the "fulfilmentInfo" datatype to indicate the timeout of the fulfilment deadline.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network node or entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

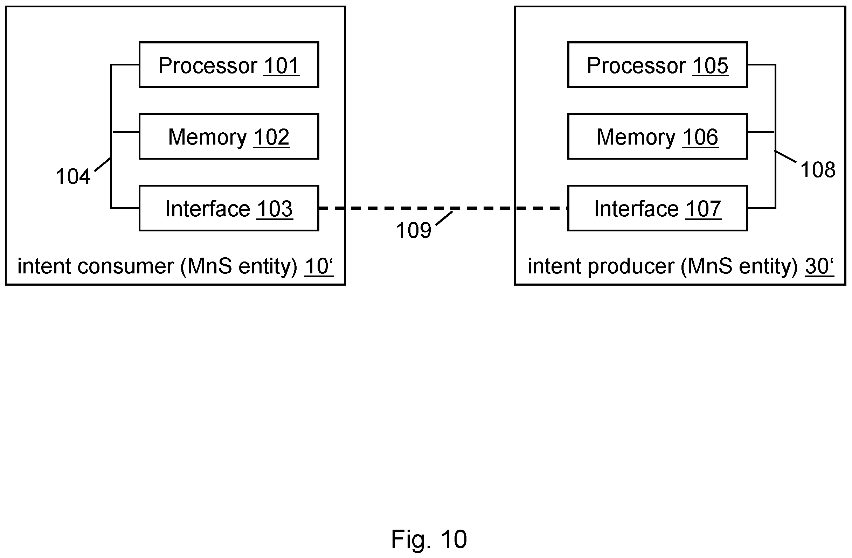

In Figure 10, an alternative illustration of apparatuses according to example embodiments is depicted. As indicated in Figure 10, according to example embodiments, the apparatus (network node or entity) 10' (corresponding to the network node or entity 10) comprises a processor 101, a memory 102 and an interface 103, which are connected by a bus 104 or the like. Further, according to example embodiments, the apparatus (network node or entity) 30' (corresponding to the network node or entity 30) comprises a processor 105, a memory 106 and an interface 107, which are connected by a bus 108 or the like, and the apparatuses may be connected via link 109, respectively.

The processor 101/105 and/or the interface 103/107 may also include a modem or the like to facilitate communication over a (hardwire or wireless) link, respectively. The interface 103/107 may include a suitable transceiver coupled to one or more antennas or communication means for (hardwire or wireless) communications with the linked or connected device(s), respectively. The interface 103/107 is generally configured to communicate with at least one other apparatus, i.e. the interface thereof.

The memory 102/106 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 comprises at least one processor 101, at least one memory 102 including computer program code, and at least one interface 103 configured for communication with at least another apparatus. The processor (i.e. the at least one processor 101, with the at least one memory 102 and the computer program code) is configured to perform determining timing information indicative of when accomplishing a specific sub-target of a requested network management outcome is required, said requested network management outcome including at least one sub-target including said specific sub-target (thus the apparatus comprising corresponding means for determining), and to perform transmitting said timing information (thus the apparatus comprising corresponding means for transmitting).

According to example embodiments, an apparatus representing the network node or entity 30 comprises at least one processor 105, at least one memory 106 including computer program code, and at least one interface 107 configured for communication with at least another apparatus. The processor (i.e. the at least one processor 105, with the at least one memory 106 and the computer program code) is configured to perform deriving timing information indicative of when accomplishing a specific sub-target of a requested network management outcome is required, said requested network management outcome including at least one sub-target including said specific sub-target (thus the apparatus comprising corresponding means for deriving), and to perform controlling network management actions for satisfying said specific sub-target based on said timing information (thus the apparatus comprising corresponding means for controlling).

For further details regarding the operability/functionality of the individual apparatuses, reference is made to the above description in connection with any one of Figures 1 to 9, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for fulfillment control in intent-based networking. Such measures exemplarily comprise determining timing information indicative of when accomplishing a specific sub-target of a requested network management outcome is required, said requested network management outcome including at least one sub-target including said specific sub-target.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

The above covers at least the following Items:
Item 1. A method comprising
   determining timing information indicative of when accomplishing a specific sub-target of a requested network management outcome is required, said requested network management outcome including at least one sub-target including said specific sub-target, and
   transmitting said timing information.
Item 2. The method according to Item 1, further comprising
   transmitting a request for said requested network management outcome, wherein said request for said requested network management outcome includes said timing information, or
   transmitting a request for an update of said requested network management outcome, wherein said request for said update of said requested network management outcome includes said timing information.
Item 3. The method according to Item 1 or 2, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 4. The method according to any of Items 1 to 3, further comprising
   receiving a request response including information indicative of whether said accomplishing said specific sub-target by when said accomplishing said specific sub-target is required according to said timing information is feasible.
Item 5. The method according to Item 4, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the method further comprises
   re-determining said timing information, and
   transmitting said re-determined timing information.
Item 6. The method according to any of Items 1 to 5, further comprising
   receiving a notification indicative of that said specific sub-target is achieved, or
   receiving a notification indicative of that a period corresponding to when said accomplishing said specific sub-target is required according to said timing information is expired without said specific sub-target being achieved.
Item 7. A method comprising
   deriving timing information indicative of when accomplishing a specific sub-target of a requested network management outcome is required, said requested network management outcome including at least one sub-target including said specific sub-target, and
   controlling network management actions for satisfying said specific sub-target based on said timing information.
Item 8. The method according to Item 7, wherein
   in relation to said deriving, the method further comprises
   receiving said timing information.
Item 9. The method according to Item 8, further comprising
   receiving a request for said requested network management outcome, wherein said request for said requested network management outcome includes said timing information, or
   receiving a request for an update of said requested network management outcome, wherein said request for said update of said requested network management outcome includes said timing information.
Item 10. The method according to Item 7, wherein
   said timing information is first timing information, and
   in relation to said deriving, the method further comprises
      receiving second timing information indicative of when accomplishing said requested network management outcome is required, and
      determining said first timing information based on said second timing information such that each of said at least one sub-target including said specific sub-target is accomplished by when said accomplishing said requested network management outcome is required.
Item 11. The method according to Item 10, further comprising
   receiving a request for said requested network management outcome, wherein said request for said requested network management outcome includes said second timing information, or
   receiving a request for an update of said requested network management outcome, wherein said request for said update of said requested network management outcome includes said second timing information.
Item 12. The method according to any of Items 7 to 11, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 13. The method according to any of Items 7 to 12, further comprising
   checking whether said accomplishing said specific sub-target by when said accomplishing said specific sub-target is required according to said timing information is feasible, and
   transmitting a request response including information indicative of whether said accomplishing said specific sub-target by when said accomplishing said specific sub-target is required according to said timing information is feasible based on a result of said checking.
Item 14. The method according to Item 13, further comprising
   checking whether said accomplishing said specific sub-target after when said accomplishing said specific sub-target is required according to said timing information is feasible, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the method further comprises
   receiving re-determined timing information.
Item 15. The method according to any of Items 7 to 14, further comprising
   monitoring a state of accomplishing said specific sub-target during a period corresponding to when said accomplishing said specific sub-target is required according to said timing information, and
   transmitting a notification indicative of that said specific sub-target is achieved based on said state, or
   transmitting a notification indicative of that a period corresponding to when said accomplishing said specific sub-target is required according to said timing information is expired without said specific sub-target being achieved based on said state.
Item 16. An apparatus comprising
   determining circuitry configured to determine timing information indicative of when accomplishing a specific sub-target of a requested network management outcome is required, said requested network management outcome including at least one sub-target including said specific sub-target, and
   transmitting circuitry configured to transmit said timing information.
Item 17. The apparatus according to Item 16, further comprising
   transmitting circuitry configured to
   transmit a request for said requested network management outcome, wherein said request for said requested network management outcome includes said timing information, or to
   transmit a request for an update of said requested network management outcome, wherein said request for said update of said requested network management outcome includes said timing information.
Item 18. The apparatus according to Item 16 or 17, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 19. The apparatus according to any of Items 16 to 18, further comprising
   receiving circuitry configured to receive a request response including information indicative of whether said accomplishing said specific sub-target by when said accomplishing said specific sub-target is required according to said timing information is feasible.
Item 20. The apparatus according to Item 19, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the apparatus further comprises
   re-determining circuitry configured to re-determine said timing information, and
   transmitting circuitry configured to transmit said re-determined timing information.
Item 21. The apparatus according to any of Items 16 to 20, further comprising
   receiving circuitry configured to
   receive a notification indicative of that said specific sub-target is achieved, or to
   receive a notification indicative of that a period corresponding to when said accomplishing said specific sub-target is required according to said timing information is expired without said specific sub-target being achieved.
Item 22. An apparatus comprising
   deriving circuitry configured to derive timing information indicative of when accomplishing a specific sub-target of a requested network management outcome is required, said requested network management outcome including at least one sub-target including said specific sub-target, and
   controlling circuitry configured to control network management actions for satisfying said specific sub-target based on said timing information.
Item 23. The apparatus according to Item 22 further comprising
   receiving circuitry configured to receive said timing information.
Item 24. The apparatus according to Item 23, further comprising
   receiving circuitry configured to
   receive a request for said requested network management outcome, wherein said request for said requested network management outcome includes said timing information, or to
   receive a request for an update of said requested network management outcome, wherein said request for said update of said requested network management outcome includes said timing information.
Item 25. The apparatus according to Item 22, wherein
   said timing information is first timing information, and the apparatus further comprises
   receiving circuitry configured to receive second timing information indicative of when accomplishing said requested network management outcome is required, and
   determining circuitry configured to determine said first timing information based on said second timing information such that each of said at least one sub-target including said specific sub-target is accomplished by when said accomplishing said requested network management outcome is required.
Item 26. The apparatus according to Item 25, further comprising
   receiving circuitry configured to
   receive a request for said requested network management outcome, wherein said request for said requested network management outcome includes said second timing information, or to
   receive a request for an update of said requested network management outcome, wherein said request for said update of said requested network management outcome includes said second timing information.
Item 27. The apparatus according to any of Items 22 to 26, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 28. The apparatus according to any of Items 22 to 27, further comprising
   checking circuitry configured to check whether said accomplishing said specific sub-target by when said accomplishing said specific sub-target is required according to said timing information is feasible, and
   transmitting circuitry configured to transmit a request response including information indicative of whether said accomplishing said specific sub-target by when said accomplishing said specific sub-target is required according to said timing information is feasible based on a result of said checking.
Item 29. The apparatus according to Item 28, further comprising
   checking circuitry configured to check whether said accomplishing said specific sub-target after when said accomplishing said specific sub-target is required according to said timing information is feasible, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the apparatus further comprises
   receiving circuitry configured to receive re-determined timing information.
Item 30. The apparatus according to any of Items 22 to 29, further comprising
   monitoring circuitry configured to monitor a state of accomplishing said specific sub-target during a period corresponding to when said accomplishing said specific sub-target is required according to said timing information, and
   transmitting circuitry configured to
   transmit a notification indicative of that said specific sub-target is achieved based on said state, or to
   transmit a notification indicative of that a period corresponding to when said accomplishing said specific sub-target is required according to said timing information is expired without said specific sub-target being achieved based on said state.
Item 31. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
   determining timing information indicative of when accomplishing a specific sub-target of a requested network management outcome is required, said requested network management outcome including at least one sub-target including said specific sub-target, and
   transmitting said timing information.
Item 32. The apparatus according to Item 31, wherein
   the at least one processor, with the at least one memory and the computer program code, being configured to cause the apparatus to perform:
   transmitting a request for said requested network management outcome, wherein said request for said requested network management outcome includes said timing information, or
   transmitting a request for an update of said requested network management outcome, wherein said request for said update of said requested network management outcome includes said timing information.
Item 33. The apparatus according to Item 31 or 32, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 34. The apparatus according to any of Items 31 to 33, wherein
   the at least one processor, with the at least one memory and the computer program code, being configured to cause the apparatus to perform:
   receiving a request response including information indicative of whether said accomplishing said specific sub-target by when said accomplishing said specific sub-target is required according to said timing information is feasible.
Item 35. The apparatus according to Item 34, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and
   the at least one processor, with the at least one memory and the computer program code, being configured to cause the apparatus to perform:
      re-determining said timing information, and
      transmitting said re-determined timing information.
Item 36. The apparatus according to any of Items 31 to 35, wherein
   the at least one processor, with the at least one memory and the computer program code, being configured to cause the apparatus to perform:
   receiving a notification indicative of that said specific sub-target is achieved, or
   receiving a notification indicative of that a period corresponding to when said accomplishing said specific sub-target is required according to said timing information is expired without said specific sub-target being achieved.
Item 37. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      deriving timing information indicative of when accomplishing a specific sub-target of a requested network management outcome is required, said requested network management outcome including at least one sub-target including said specific sub-target, and
      controlling network management actions for satisfying said specific sub-target based on said timing information.
Item 38. The apparatus according to Item 37, wherein
   in relation to said deriving, the at least one processor, with the at least one memory and the computer program code, being configured to cause the apparatus to perform:
   receiving said timing information.
Item 39. The apparatus according to Item 38, wherein
   the at least one processor, with the at least one memory and the computer program code, being configured to cause the apparatus to perform:
   receiving a request for said requested network management outcome, wherein said request for said requested network management outcome includes said timing information, or
   receiving a request for an update of said requested network management outcome, wherein said request for said update of said requested network management outcome includes said timing information.
Item 40. The apparatus according to Item 37, wherein
   said timing information is first timing information, and
   in relation to said deriving, the at least one processor, with the at least one memory and the computer program code, being configured to cause the apparatus to perform:
      receiving second timing information indicative of when accomplishing said requested network management outcome is required, and
      determining said first timing information based on said second timing information such that each of said at least one sub-target including said specific sub-target is accomplished by when said accomplishing said requested network management outcome is required.
Item 41. The apparatus according to Item 40, wherein
   the at least one processor, with the at least one memory and the computer program code, being configured to cause the apparatus to perform:
   receiving a request for said requested network management outcome, wherein said request for said requested network management outcome includes said second timing information, or
   receiving a request for an update of said requested network management outcome, wherein said request for said update of said requested network management outcome includes said second timing information.
Item 42. The apparatus according to any of Items 37 to 41, wherein
   said timing information represents an absolute time by when said accomplishing said specific sub-target is required, or
   said timing information represents a relative time, from a specific moment in time, by when said accomplishing said specific sub-target is required, wherein optionally
      said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.
Item 43. The apparatus according to any of Items 37 to 42, wherein
   the at least one processor, with the at least one memory and the computer program code, being configured to cause the apparatus to perform:
   checking whether said accomplishing said specific sub-target by when said accomplishing said specific sub-target is required according to said timing information is feasible, and
   transmitting a request response including information indicative of whether said accomplishing said specific sub-target by when said accomplishing said specific sub-target is required according to said timing information is feasible based on a result of said checking.
Item 44. The apparatus according to Item 43, wherein
   the at least one processor, with the at least one memory and the computer program code, being configured to cause the apparatus to perform:
   checking whether said accomplishing said specific sub-target after when said accomplishing said specific sub-target is required according to said timing information is feasible, wherein
   said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the at least one processor, with the at least one memory and the computer program code, being configured to cause the apparatus to perform:
      receiving re-determined timing information.
Item 45. The apparatus according to any of Items 37 to 44, wherein
   the at least one processor, with the at least one memory and the computer program code, being configured to cause the apparatus to perform:
   monitoring a state of accomplishing said specific sub-target during a period corresponding to when said accomplishing said specific sub-target is required according to said timing information, and
      transmitting a notification indicative of that said specific sub-target is achieved based on said state, or
      transmitting a notification indicative of that a period corresponding to when said accomplishing said specific sub-target is required according to said timing information is expired without said specific sub-target being achieved based on said state.
Item 46. A computer program product comprising computer-executable computer program code which, when the program is run on a computer, is configured to cause the computer to carry out the method according to any one of Items 1 to 6 or 7 to 15.
Item 47. The computer program product according to Item 46, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: 3rd Generation Partnership Project
- 5GS: 5G System
- AI: artificial intelligence
- CAN: cognitive autonomous network
- CIO: cell individual offset
- DL: downlink
- GUI: graphical user interface
- IBN: intent-based networking
- IDNMS: intent-driven network management system
- IFS: intent fulfilment system
- IOC: information/instance object class
- ISP: intent specification platform
- KPI: key performance indicator
- ML: machine learning
- MnS: management services
- MOI: managed object instance
- NE: network element
- PPHO: ping-pong handover
- RAN: radio access network
- RET: remote electrical tilting
- RLF: radio link failure
- RSRP: reference signal received power
- SDO: Standards Development Organization
- TXP: transmitted power
- TTT: time-to-trigger
- UE: user equipment

## Claims

1. A method comprising
determining timing information indicative of when accomplishing a specific sub-target of a requested network management outcome is required, said requested network management outcome including at least one sub-target including said specific sub-target, and
transmitting said timing information.

2. The method according to claim 1, further comprising
transmitting a request for said requested network management outcome, wherein said request for said requested network management outcome includes said timing information, or
transmitting a request for an update of said requested network management outcome, wherein said request for said update of said requested network management outcome includes said timing information.

3. The method according to claim 1 or 2, wherein
said timing information represents an absolute time by when said accomplishing said specific sub-target is required, or
said timing information represents a relative time, from a specific moment in time, by when said accomplishing said specific sub-target is required, wherein optionally
said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.

4. The method according to any of claims 1 to 3, further comprising
receiving a request response including information indicative of whether said accomplishing said specific sub-target by when said accomplishing said specific sub-target is required according to said timing information is feasible, wherein optionally
said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the method further comprises
re-determining said timing information, and
transmitting said re-determined timing information.

5. The method according to any of claims 1 to 4, further comprising
receiving a notification indicative of that said specific sub-target is achieved, or
receiving a notification indicative of that a period corresponding to when said accomplishing said specific sub-target is required according to said timing information is expired without said specific sub-target being achieved.

6. A method comprising
deriving timing information indicative of when accomplishing a specific sub-target of a requested network management outcome is required, said requested network management outcome including at least one sub-target including said specific sub-target, and
controlling network management actions for satisfying said specific sub-target based on said timing information.

7. The method according to claim 6, wherein
in relation to said deriving, the method further comprises
receiving said timing information.

8. The method according to claim 7, further comprising
receiving a request for said requested network management outcome, wherein said request for said requested network management outcome includes said timing information, or
receiving a request for an update of said requested network management outcome, wherein said request for said update of said requested network management outcome includes said timing information.

9. The method according to claim 6, wherein
said timing information is first timing information, and
in relation to said deriving, the method further comprises
receiving second timing information indicative of when accomplishing said requested network management outcome is required, and
determining said first timing information based on said second timing information such that each of said at least one sub-target including said specific sub-target is accomplished by when said accomplishing said requested network management outcome is required.

10. The method according to claim 9, further comprising
receiving a request for said requested network management outcome, wherein said request for said requested network management outcome includes said second timing information, or
receiving a request for an update of said requested network management outcome, wherein said request for said update of said requested network management outcome includes said second timing information.

11. The method according to any of claims 6 to 10, wherein
said timing information represents an absolute time by when said accomplishing said specific sub-target is required, or
said timing information represents a relative time, from a specific moment in time, by when said accomplishing said specific sub-target is required, wherein optionally
said specific moment in time is at least one of the following: a receiving time of a request for said requested network management outcome, or a transmission time of said request for said requested network management outcome, or a receiving time of a request for an update of said requested network management outcome, or a transmission time of said request for said update of said requested network management outcome.

12. The method according to any of claims 6 to 11, further comprising
checking whether said accomplishing said specific sub-target by when said accomplishing said specific sub-target is required according to said timing information is feasible, and
transmitting a request response including information indicative of whether said accomplishing said specific sub-target by when said accomplishing said specific sub-target is required according to said timing information is feasible based on a result of said checking, wherein optionally
the method further comprises
checking whether said accomplishing said specific sub-target after when said accomplishing said specific sub-target is required according to said timing information is feasible, wherein
said request response includes information indicative of that said accomplishing said specific sub-target by when said accomplishing said specific sub-target is required according to said timing information is not feasible but that said accomplishing said specific sub-target after when said accomplishing said specific sub-target is required according to said timing information is feasible, and the method further comprises
receiving re-determined timing information.

13. The method according to any of claims 6 to 12, further comprising
monitoring a state of accomplishing said specific sub-target during a period corresponding to when said accomplishing said specific sub-target is required according to said timing information, and
transmitting a notification indicative of that said specific sub-target is achieved based on said state, or
transmitting a notification indicative of that a period corresponding to when said accomplishing said specific sub-target is required according to said timing information is expired without said specific sub-target being achieved based on said state.

14. An apparatus comprising
determining circuitry configured to determine timing information indicative of when accomplishing a specific sub-target of a requested network management outcome is required, said requested network management outcome including at least one sub-target including said specific sub-target, and
transmitting circuitry configured to transmit said timing information.

15. An apparatus comprising
deriving circuitry configured to derive timing information indicative of when accomplishing a specific sub-target of a requested network management outcome is required, said requested network management outcome including at least one sub-target including said specific sub-target, and
controlling circuitry configured to control network management actions for satisfying said specific sub-target based on said timing information.
